(19) Europäisches Patentamt / European Patent Office / Office européen des brevets

(11) **EP 3 582 179 B1**

(12) **EUROPEAN PATENT SPECIFICATION**

(45) Date of publication and mention of the grant of the patent:
**12.08.2020 Bulletin 2020/33**

(51) Int Cl.:
*G06T 7/00* (2017.01)  *G06T 7/60* (2017.01)
*G01B 11/02* (2006.01)  *G06T 7/62* (2017.01)

(21) Application number: **19172234.7**

(22) Date of filing: **02.05.2019**

(54) **IMAGE PROCESSING APPARATUS, IMAGE PROCESSING METHOD, AND IMAGE PROCESSING PROGRAM**

BILDVERARBEITUNGSVORRICHTUNG, BILDVERARBEITUNGSVERFAHREN UND BILDVERARBEITUNGSPROGRAMM

APPAREIL DE TRAITEMENT D'IMAGES, PROCÉDÉ DE TRAITEMENT D'IMAGES ET PROGRAMME DE TRAITEMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2018 JP 2018112518**

(43) Date of publication of application:
**18.12.2019 Bulletin 2019/51**

(73) Proprietor: **FUJITSU LIMITED**
**Kawasaki-shi,**
**Kanagawa 211-8588 (JP)**

(72) Inventors:
• **Nonaka, Yusuke**
**Kanagawa, 211-8588 (JP)**
• **Segawa, Eigo**
**Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 816 528**

• **AYAHO MIYAMOTO ET AL: "Automatic Crack Recognition System for Concrete Structures Using Image Processing Approach", ASIAN JOURNAL OF INFORMATION TECHNOLOGY, vol. 6, no. 5, 1 January 2007 (2007-01-01) , pages 553-561, XP055631895,**
• **MIZUNO KENICHI ET AL: "Quality of Images Acquired for Diagnosis of Marine Structure Deterioration", 2018 OCEANS - MTS/IEEE KOBE TECHNO-OCEANS (OTO), IEEE, 28 May 2018 (2018-05-28), pages 1-5, XP033466419, DOI: 10.1109/OCEANSKOBE.2018.8559088 [retrieved on 2018-12-04]**
• **ITO A ET AL: "Accurate extraction and measurement of fine cracks from concrete block surface image", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, vol. 3, 5 November 2002 (2002-11-05), pages 2202-2207, XP010633053, DOI: 10.1109/IECON.2002.1185314 ISBN: 978-0-7803-7474-4**

EP 3 582 179 B1

**Description**

FIELD

The embodiment discussed herein is related to an image processing apparatus, an image processing method, and an image processing program.

BACKGROUND

In an inspection work of structures such as bridges, roads, buildings, dams, banks, or the like, a crack is automatically detected from an image obtained by photographing a surface of the structure with a camera, and a length and a width of the crack are measured in some cases. This reduces work man-hour in comparison with a case of visually detecting the cracks.

For measuring cracks, a crack measurement method in which a total of luminance values of respective pixels in a crack region is obtained and a crack area is obtained from the total of the luminance values has been known (for example, see Japanese Laid-open Patent Publication No. 2003-214827). A method of measuring a microfine crack width for measuring a crack width of a sub-pixel size, and an image processing program for evaluating a dark region based on gradient dispersion of a line connecting two pixels configuring a line image of the dark region have also been known (for example, see Japanese Laid-open Patent Publication No. 2005-241471 and Japanese Laid-open Patent Publication No. 2018-36226).

A measurement apparatus which simply measures a photographed object through image analysis, and a camera calibration apparatus which obtains a camera parameter based on a correlation between world coordinates and image coordinates have also been known (for example, see Japanese Laid-open Patent Publication No. 2017-3399 and Japanese Laid-open Patent Publication No. 2006-67272).

Ayaho Miyamoto et al: "Automatic Crack Recognition System for Concrete Structures Using Image Processing Approach", January 1, 2017 relates to a system that extracts a crack pattern from digital images. A characteristic feature of the system is the use of an interactive genetic algorithm to optimize some parameters involved in the digital image processing. The algorithm prevents the system user from adjusting the parameters by trial and error. The user only evaluates some images produced by the system. Once the crack pattern on the concrete surface can be recognized, in addition to an automatic measuring method of the maximum crack width, a recognition expert system which performs automatically is introduced.

PROBLEM TO BE SOLVED

A width of a crack generated on a surface of a structure such as a bridge or the like is desirably measured in increments of 0.1 mm. However, when the structure is photographed with a high resolution such that a length of 0.1 mm corresponds to one pixel or more, since a photographing range per one time narrows, the photographing is repeated many times in order to photograph the entire structure, and work efficiency drops.

In the measurement method disclosed in Japanese Laid-open Patent Publication No. 2003-214827, the crack region is judged by binarizing original image data, and the total of the luminance values of the pixels in the crack region is obtained. By multiplying the total of luminance values by a correction coefficient, the crack area is obtained, and by dividing the crack area by a crack length, a crack width is obtained. This makes it possible to estimate the crack width in a sub-pixel unit.

However, by influence of a blur due to focus deviation of the camera or image quantization, measurement accuracy of the crack width drops in some cases.

Note that the problem arises not only in the case where the width of the crack generated on the surface of the structure is measured, but also in a case where a width of a damage generated on a surface of another object is measured.

According to an aspect, it is an object of the present embodiment to accurately estimate a width of a linear damage from an image obtained by photographing an object.

SUMMARY

The invention is defined by the appended claims.

According to an aspect of the embodiments, an image processing method is performed by a computer for estimating a width of a crack or the like. The method includes: extracting a linear region in which a linear damage appears from an image of an object captured by an imaging apparatus; calculating a luminance information sum by adding luminance information of each pixel included in the linear region in a direction crossing the linear region; and estimating, from the calculated luminance information sum, based on a relational expression indicating a relationship between luminance information sum and a width of a damage, a width of the linear damage.

ADVANTAGEOUS EFFECT

According to the embodiment, it is possible to accurately estimate a width of a linear damage from an image obtained by photographing an object.

BRIEF DESCRIPTION OF DRAWINGS

FIG. 1 is a functional configuration diagram of an image processing apparatus;
FIG. 2 is a flowchart of image processing;
FIG. 3 is a functional configuration diagram of an image processing system;
FIG. 4 is a diagram illustrating luminance in a linear region;
FIGs. 5A and 5B are diagrams illustrating light with which a background portion and a crack portion are irradiated;
FIGs. 6A to 6C are diagrams each illustrating an angle range of incident light;
FIG. 7 is a diagram illustrating a relationship between a depth and the luminance inside the crack;
FIGs. 8A and 8B are diagrams illustrating input ranges of the light with which the crack portion and the background portion are irradiated;
FIGs. 9A to 9C are diagrams illustrating a method for obtaining a relational expression;
FIG. 10 is a flowchart illustrating a specific example of the image processing;
FIG. 11 is a diagram illustrating direction estimation processing;
FIGs. 12A and 12B are diagrams each illustrating a filter;
FIG. 13 is a diagram illustrating background luminance calculation processing;
FIG. 14 is a diagram illustrating luminance information addition processing;
FIG. 15 is a diagram illustrating a method for obtaining the maximum depth;
FIG. 16 is a diagram illustrating a method for calculating a width of the crack;
FIGs. 17A and 17B are diagrams each illustrating an estimation result; and
FIG. 18 is a configuration diagram of an information processing apparatus.

DESCRIPTION OF EMBODIMENTS

The embodiment will be described in detail below with reference to the drawings.

In the measurement method disclosed in Japanese Laid-open Patent Publication No. 2003-214827, from an image obtained by photographing a crack having a known area beforehand, a correction coefficient is obtained. Accordingly, it is assumed that a contrast of a crack region in the image obtained by photographing the known crack and a contrast of a crack region in an image obtained by photographing a crack to be measured match each other.

However, if the contrast of the image changes in accordance with a photographing condition, since a relationship between a total of luminance values and the crack area also changes, in a case where the correction coefficient determined beforehand is used, measurement accuracy of the crack width drops. Although it is possible to maintain the measurement accuracy by recalculating the correction coefficient each time the photographing condition is changed, an area of a new crack to be photographed is unknown in many cases, and it is thus difficult to obtain the correction coefficient with respect to the photographing target.

In a case of a thin crack, by influence of a blur due to focus deviation of a camera or image quantization, original luminance of the crack is not observed in many cases. Accordingly, the thin crack has a larger change in the contrast depending on the photographing condition than that of a thick crack, and the measure accuracy of the crack width further drops.

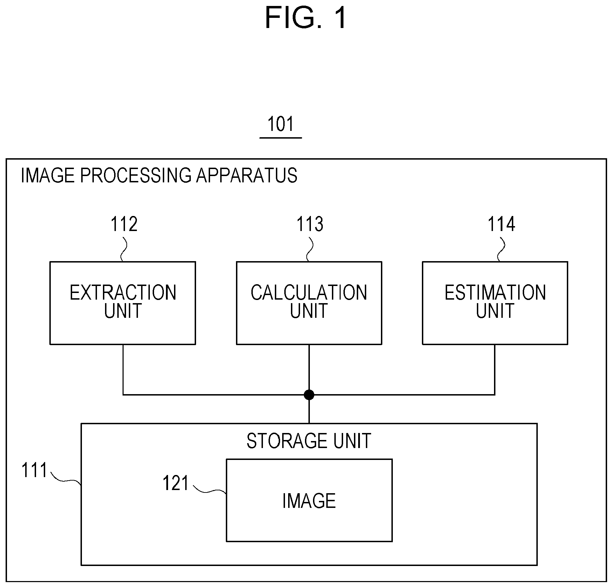

FIG. 1 illustrates a functional configuration example of an image processing apparatus of the embodiment. An image processing apparatus 101 in FIG. 1 includes a storage unit 111, an extraction unit 112, a calculation unit 113, and an estimation unit 114. The storage unit 111 stores an image 121 of an object photographed by an imaging apparatus. The extraction unit 112, the calculation unit 113, and the estimation unit 114 perform image processing for the image 121.

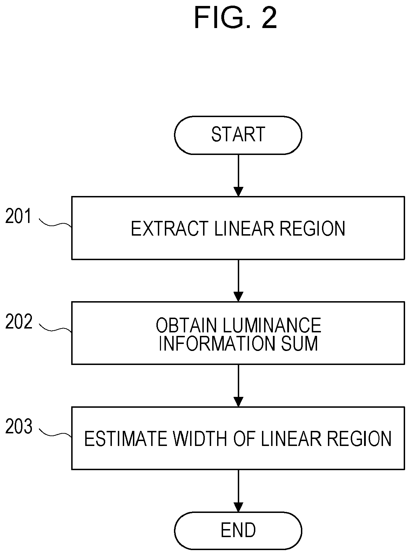

FIG. 2 is a flowchart illustrating an example of the image processing performed by the image processing apparatus 101 in FIG. 1. First, the extraction unit 112 extracts a linear region in which a linear damage appears from the image 121 (step 201). Next, the calculation unit 113 obtains a luminance information sum, by adding luminance information for each pixel included in the linear region in a direction crossing the linear region (step 202). The estimation unit 114 estimates a width of the linear damage, from the luminance information sum obtained by the calculation unit 113, based on a relational expression indicating a relationship between the luminance information sum and a damage width (step 203).

According to the image processing apparatus 101 in FIG. 1, it is possible to accurately estimate a width of the linear damage from the image obtained by photographing the object.

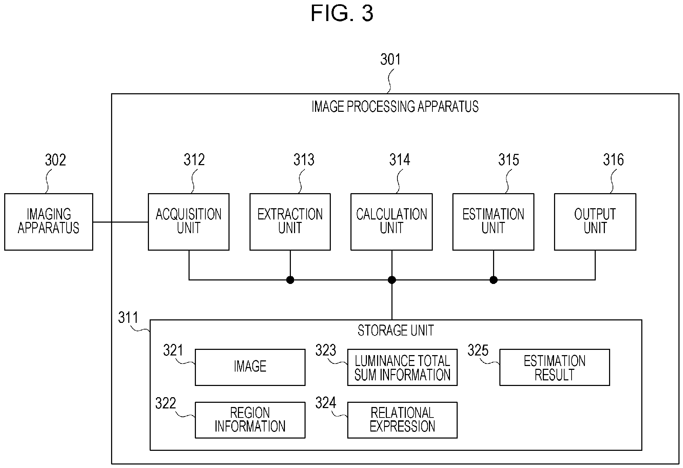

FIG. 3 illustrates a functional configuration example of an image processing system including the image processing apparatus 101 in FIG. 1. The image processing system in FIG. 3 includes an image processing apparatus 301 and an imaging apparatus 302.

The image processing apparatus 301 corresponds to the image processing apparatus 101 in FIG. 1, and includes a storage unit 311, an acquisition unit 312, an extraction unit 313, a calculation unit 314, an estimation unit 315, and an output unit 316. The storage unit 311, the extraction unit 313, the calculation unit 314, and the estimation unit 315 correspond to the storage unit 111, the extraction unit 112, the calculation unit 113, and the estimation unit 114 in FIG. 1, respectively, and an image 321 corresponds to the image 121.

The imaging apparatus 302 is, for example, a camera having an imaging element such as a charged-coupled device (CCD), a complementary metal-oxide-semiconductor (CMOS), or the like, photographs an object and acquires the image 321 of the object. The imaging apparatus 302 outputs the image 321 of the object to the image processing apparatus 301.

The acquisition unit 312 of the image processing apparatus 301 acquires the image 321 from the imaging apparatus 302, and stores it in the storage unit 311. The extraction unit 313 extracts a linear region from the image 321, generates region information 322 indicating the extracted linear region, and stores it in the storage unit 311. For example, the object to be photographed is a structure such as a bridge, a road, a building, a dam, a bank, or the like, and the linear region is a region in which a damage such as a crack, a scratch, or the like present on a surface of the structure appears.

The calculation unit 314 obtains a luminance information sum, by adding luminance information of each pixel in a direction crossing the linear region among a plurality of pixels included in each linear region, and stores the obtained luminance information sum as luminance total sum information 323 in the storage unit 311.

In the image 321, the linear damage such as a crack or the like appears as a dark linear region with low luminance in many cases, and in the linear region, the luminance tends to continuously decrease from a shallow portion to a deep portion of the damage. Therefore, a change in the luminance in a width direction of the damage is larger than a change in the luminance in a length direction of the damage. Accordingly, obtaining a direction in which the luminance changes in the linear region makes it possible to specify the width direction which is a direction crossing the linear region.

The calculation unit 314 obtains a luminance gradient direction being a direction in which the luminance changes, using luminance of a target pixel included in the linear region and luminance of an adjacent pixel adjacent to the target pixel. The calculation unit 314 obtains the luminance information sum using the obtained luminance gradient direction as the width direction of the linear region. As the luminance information of each pixel included in the linear region, the luminance of the pixel may be used, or a difference between luminance of a pixel in a background region other than the linear region and the luminance of the pixel may be used.

The estimation unit 315 estimates a width of the damage displayed in the linear region using a relational expression 324 stored in the storage unit 311 from the luminance total sum information 323 of each linear region, and stores an estimation result 325 indicating the estimated width in the storage unit 311. The output unit 316 outputs the estimation result 325.

The relational expression 324 indicates a relationship between the luminance information sum and the damage width, and includes, for example, the following parameters.

(1) Parameter indicating a posture of the imaging apparatus 302 with respect to a surface of the object
(2) Parameter indicating background luminance which is the luminance of the pixel in the background region other than the linear region
(3) Parameter indicating a resolution of the image 321

The calculation unit 314 checks a luminance difference between two adjacent pixels in the width direction of each linear region from the target pixel toward an outer side of the linear region, and obtains luminance of a pixel positioned on the outer side of two pixels whose luminance difference becomes smaller than a threshold. The obtained luminance is used as the background luminance of the relational expression 324. The resolution of the image 321 expresses a length in a real space corresponding to one pixel.

The image processing apparatus 301 estimates the damage width based on the following properties relating to the image 321.

(C1) A luminance total sum of the linear region does not change in a case where the image 321 is blurred and in a case where the image 321 is not blurred.
(C2) It is possible to calculate the luminance total sum of the linear region from the blurred image 321.

(C3) It is possible to model a photographing process of the damage of the object.

(C4) By expressing the luminance total sum of the linear region in a case where the image 321 is not blurred, from the model of the photographing process, using the damage width, the posture of the imaging apparatus 302, the background luminance, the luminance gradient direction, and the resolution of the image 321, it is possible to set the relational expression 324.

(C5) It is possible to obtain the background luminance and the luminance gradient direction from the image 321, and it is possible to acquire the posture of the imaging apparatus 302 and the resolution of the image 321 from a photographing condition.

(C6) It is possible to obtain the luminance total sum of the linear region in a case where the image 321 is not blurred from (C1) and (C2).

(C7) It is possible to calculate the damage width using the relational expression 324 from (C4), (C5), and (C6).

First, the property of (C1) will be described. The blur of the image 321 is generated due to focus deviation of the imaging apparatus 302, quantization of the image 321, or the like, a change in luminance by the blur on a coordinate x in the image 321 is expressed by a blur function g(x). For example, the blur function g(x) is a point spread function (PSF), and standardized so as to satisfy the following formula.

$$\int_{-\infty}^{\infty} g(x)dx = 1 \qquad (1)$$

The luminance observed on the coordinate x is taken as h(x), a total sum of the luminance h(x) for the coordinate x is expressed as an integral of h(x) in a section $[-\infty, \infty]$. Furthermore, the integral is expressed by a convolution integral of a luminance f(x) in an image which is not blurred and the blur function g(x), and may be transformed as the following formula.

$$\int_{-\infty}^{\infty} h(x)dx$$
$$= \int_{-\infty}^{\infty} \int_{-\infty}^{\infty} f(t)g(x-t)dtdx$$
$$= \int_{-\infty}^{\infty} f(t)\int_{-\infty}^{\infty} g(x-t)dxdt \qquad (2)$$
$$= \int_{-\infty}^{\infty} f(t)dt$$

Accordingly, the total sum of the luminance h(x) observed in the case where the image 321 is blurred matches a total sum of the luminance f(x) in the image which is not blurred.

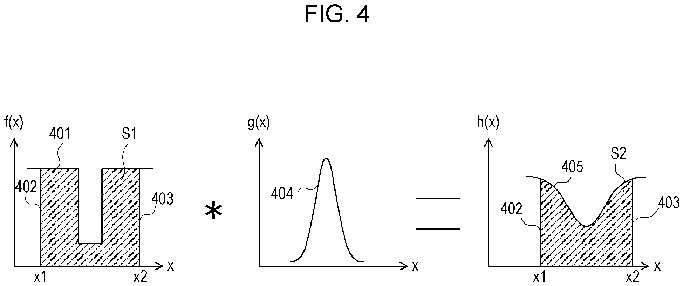

FIG. 4 illustrates an example of the luminance in the linear region in which the crack appears. An x axis represents the luminance gradient direction in the linear region, a section [x1, x2] on the x axis includes the linear region. A polygonal line 401 expresses the luminance f(x), a line segment 402 is part of a straight line of x = x1, a line segment 403 is part of a straight line of x = x2. A curved line 404 expresses the blur function g(x), a curved line 405 expresses the luminance h(x).

A result obtained by integrating the luminance f(x) in the section [x1, x2] expresses an area S1 of a figure surrounded by the x axis, the polygonal line 401, the line segment 402, and the line segment 403. A result obtained by integrating the luminance h(x) in the section [x1, x2] expresses an area S2 of a figure surrounded by the x axis, the curved line 405, the line segment 402, and the line segment 403.

The area S2 is expressed by the convolution integral of the luminance f(x) and the blur function g(x), matches the area S1. Accordingly, in a case where the image 321 is blurred and in a case where the image 321 is not blurred, the luminance total sum does not change in the luminance gradient direction.

Next, the property of (C3) will be described. The linear region in which the damage appears gets dark because an angle of incident light is restricted inside the damage, and therefore a light amount reaching the inside decreases.

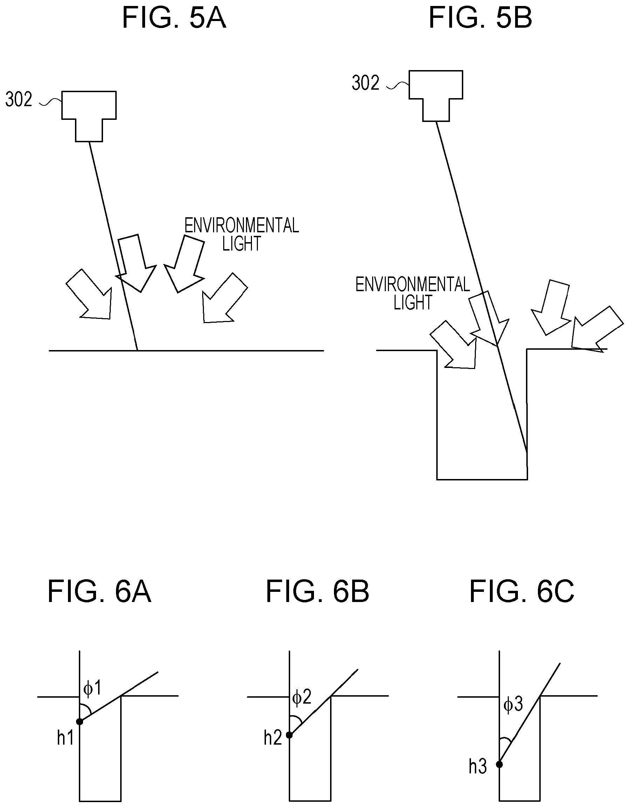

FIGs. 5A and 5B illustrate examples of light with which a background portion and a crack portion are irradiated. FIG. 5A illustrates environmental light with which the background portion is irradiated, and FIG. 5B illustrates environmental light with which the crack portion is irradiated. Since the angle of the incident light is restricted inside the crack, the light amount reaching the inside decreases. Accordingly, modeling the light amount which decreases inside the crack makes it possible to set a calculation formula for obtaining the luminance of the linear region in which the crack appears.

Next, the property of (C4) will be described. In a case where the damage width is determined, it is possible to calculate an angle range of light incident on a predetermined position inside the damage, and it is possible to calculate a luminance ratio of the linear region to the background region using the angle range.

FIGs. 6A to 6C each illustrate an example of the angle range of light incident on the predetermined position inside the crack. FIG. 6A illustrates an angle range $\varphi1$ of light incident on a position of a depth h1 inside the crack, FIG. 6B illustrates an angle range $\varphi2$ of light incident on a position of a depth h2, and FIG. 6C illustrates an angle range $\varphi3$ of light incident on a position of a depth h3. In this example, h1 < h2 < h3 is satisfied, and $\varphi1 > \varphi2 > \varphi3$ is satisfied. As described above, the deeper the position is, the smaller the angle range $\varphi$ of the incident light is, and it is thus found that the position receives less amount of light reaching thereto and is darkened.

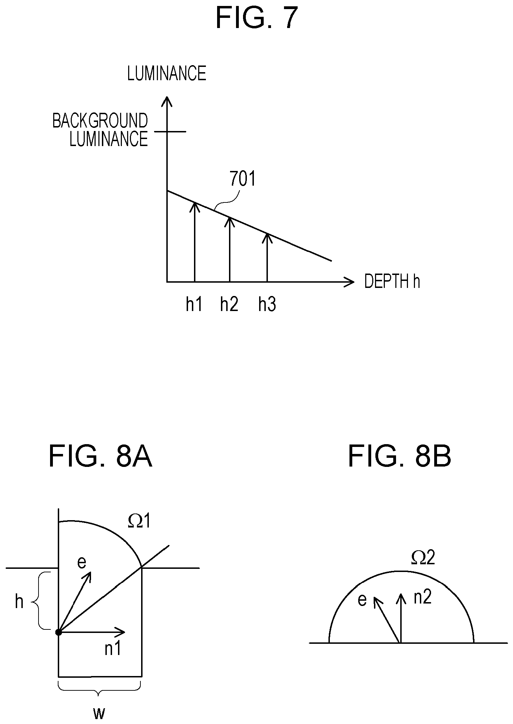

FIG. 7 illustrates an example of a relationship between the depth and the luminance inside the crack. A graph 701 expresses the luminance of the pixel in the image 321 corresponding to a position of a depth h inside the crack. The luminance inside the crack is lower than the background luminance, and monotonously decreases as the depth h increases. The graph 701 is not limited to be a straight line, is a curved line in many cases.

FIGs. 8A and 8B illustrate examples of input ranges of the light with which the crack portion and the background portion are irradiated. FIG. 8A illustrates an input range $\Omega1$ of the light with which the position of the depth h inside the crack is irradiated. The input range $\Omega1$ expresses a region determined by a crack width w in a surface of a sphere with the position of the depth h as the center. A vector n1 is a normal vector of a surface at the position of the depth h, and a vector e is a vector indicating a direction of the input light. In this case, intensity F1 of reflected light at the position of the depth h is expressed by the following formula.

$$F1 = \int_{\Omega1} n1 \cdot e \, dS \qquad (3)$$

A right side of the formula (3) expresses a result obtained by integrating an inner product of the vector n1 and the vector e across the input range $\Omega1$ using the vector e as an integration variable.

FIG. 8B illustrates an input range $\Omega2$ of the light with which a predetermined position on the surface of the object is irradiated. The input range $\Omega2$ expresses a surface of a hemisphere with the predetermined position as the center. A vector n2 is a normal vector of a surface at the predetermined position, and the vector e is the vector indicating the direction of the input light. In this case, intensity F2 of reflected light at the predetermined position is expressed by the following formula.

$$F2 = \int_{\Omega2} n2 \cdot e \, dS \qquad (4)$$

A right side of the formula (4) expresses a result obtained by integrating an inner product of the vector n2 and the vector e across the input range $\Omega2$ using the vector e as an integration variable. A ratio of brightness at the position of the depth h to brightness on the surface of the object is F1/F2.

If the posture of the imaging apparatus 302 and the luminance gradient direction in the linear region are found, it is possible to calculate the maximum depth of the damage displayed in the linear region, and it is possible to obtain the relational expression 324 using the maximum depth.

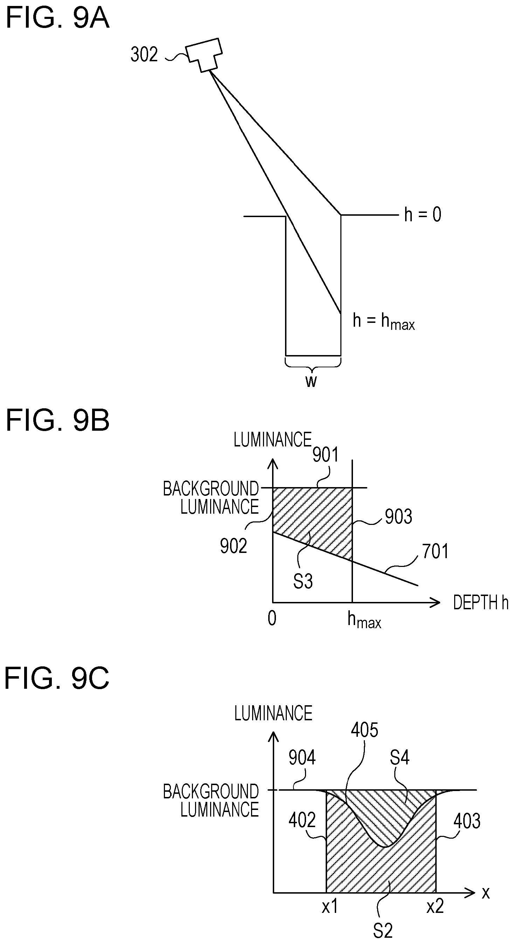

FIGs. 9A to 9C illustrate an example of a method for obtaining the relational expression 324. FIG. 9A illustrates a maximum depth $h_{max}$ of the crack observable from the imaging apparatus 302. It is possible to express the maximum depth $h_{max}$ using the posture of the imaging apparatus 302 and the crack width w.

FIG. 9B illustrates a relationship between the maximum depth $h_{max}$ and a luminance decrease amount. The graph 701 expresses, as illustrated in FIG. 7, the luminance of the pixel corresponding to the position of the depth h, a straight line 901 expresses the background luminance, a straight line 902 is a straight line of h = 0, and a straight line 903 is a straight line of h = $h_{max}$. An area S3 of a figure surrounded by the straight line 901 to the straight line 903 and the graph 701 expresses the luminance decrease amount of the linear region with respect to the background luminance.

FIG. 9C illustrates the luminance decrease amount of the linear region with respect to the background luminance. As illustrated in FIG. 4, the line segment 402 is part of the straight line of x = x1, the line segment 403 is part of the straight line of x = x2, and the curved line 405 expresses the luminance of the linear region in the luminance gradient direction. A straight line 904 expresses the background luminance. An area S4 of a figure surrounded by the line segment 402, the line segment 403, the curved line 405, and straight line 904 expresses the luminance decrease amount of the linear region with respect to the background luminance, and matches the area S3.

By subtracting the area S4 from an area of a rectangle which expresses a background luminance total sum, the area S2 which expresses the luminance total sum of the linear region is obtained. Accordingly, it is possible to express the area S2 and the area S4 as a function of the crack width, the posture of the imaging apparatus 302, the background luminance, the luminance gradient direction, and the resolution of the image 321. Among these, an unknown value is only the crack width, parameters other than that are known. It is possible to obtain the area S2 from the luminance of each pixel included in the linear region, and it is possible to obtain the area S4 from a difference between the background luminance and the luminance of each pixel included in the linear region.

Accordingly, by using the luminance of each pixel as the luminance information, or by using the difference between the background luminance and the luminance of each pixel as the luminance information, it is possible to obtain the relational expression 324 indicating the relationship between the luminance information sum and the damage width.

According to the image processing apparatus 301 in FIG. 3, it is possible to accurately estimate the width of the linear damage displayed in the image 321 which is blurred. In image processing by the image processing apparatus 301, since it is not required to specify a boundary pixel in the region in which the damage appears, it is possible to measure the damage width in a sub-pixel unit. Unlike the measurement method disclosed in Japanese Laid-open Patent Publication No. 2003-214827, it is also not required to obtain the correction coefficient from the image obtained by photographing the known crack.

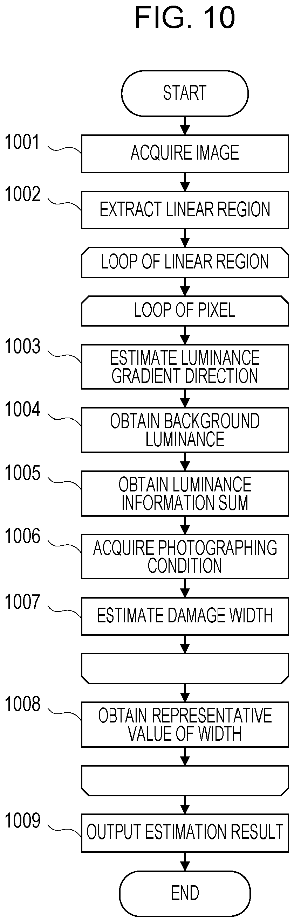

Next, with reference to FIG. 10 to FIG. 17B, the image processing performed by the image processing apparatus 301 in FIG. 3 will be described more in detail.

FIG. 10 is a flowchart illustrating a specific example of the image processing performed by the image processing apparatus 301. First, the acquisition unit 312 acquires the image 321 from the imaging apparatus 302, and stores it in the storage unit 311 (step 1001). The extraction unit 313 extracts one or a plurality of linear regions from the image 321, generates the region information 322 indicating the extracted linear region (step 1002).

For example, the extraction unit 313 is capable of extracting the linear region from the image 321, using the technique disclosed in Japanese Laid-open Patent Publication No. 2018-36226. The extraction unit 313 may extract the linear region explicitly specified on the image 321 with an input device operated by a user.

Next, the calculation unit 314 and the estimation unit 315 perform processing from step 1003 to step 1008 using each linear region indicated by the region information 322 as a processing target. The calculation unit 314 and the estimation unit 315 first perform processing from step 1003 to step 1007 using each pixel included in the linear region to be processed as a processing target.

The calculation unit 314 estimates the luminance gradient direction of the pixel to be processed (target pixel) (step 1003), and, using the estimated luminance gradient direction as the width direction of the linear region to be processed, obtains the background luminance with respect to the linear region (step 1004). The calculation unit 314 obtains the luminance information sum, by adding the luminance information of each of a plurality of pixels in the width direction of the linear region, and generates the luminance total sum information 323 indicating the obtained luminance information sum (step 1005).

Next, the estimation unit 315 acquires the photographing condition indicating the posture of the imaging apparatus 302 with respect to the surface of the object (step 1006). For example, the estimation unit 315 is capable of acquiring the photographing condition by calculating the position and the posture of the imaging apparatus 302 using the technique disclosed in Japanese Laid-open Patent Publication No. 2017-3399 or Japanese Laid-open Patent Publication No. 2006-67272. The estimation unit 315 may acquire the photographing condition input from the input device operated by the user. The photographing condition further includes the resolution of the image 321.

Next, the estimation unit 315 estimates the width of the damage displayed in the linear region, using the relational expression 324, from the luminance total sum information 323, the background luminance, and the photographing condition (step 1007).

The processing from step 1003 to step 1007 is repeated for each pixel included in the linear region to be processed. In a case where the damage widths are estimated for all the pixels, the estimation unit 315 obtains a representative value of the width from the plurality of estimated widths, and generates the estimation result 325 indicating the obtained representative value (step 1008). As the representative value of the width, the average value, the median value, the mode value, the maximum value, the minimum value, or the like of the plurality of estimated widths may be used.

The processing from step 1003 to step 1008 is repeated for each linear region extracted from the image 321. In a case where the estimation result 325 is generated for each of all the linear regions, the output unit 316 outputs the estimation result 325 (step 1009).

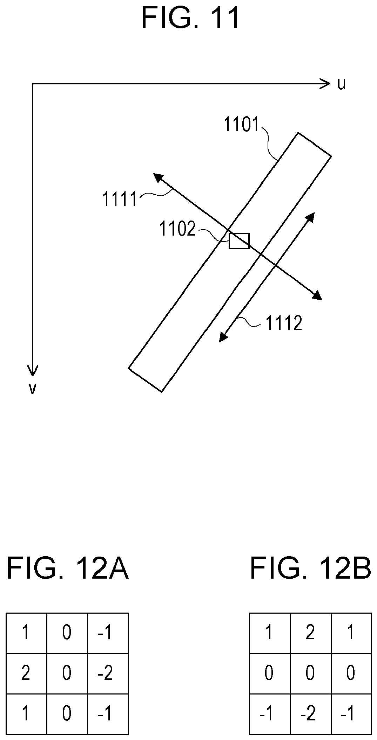

FIG. 11 illustrates an example of the direction estimation processing in step 1003. A lateral axis represents a coordinate u in a horizontal direction of the image 321, and a longitudinal axis represents a coordinate v in a vertical direction of the image 321. For example, the calculation unit 314 is capable of estimating a luminance gradient direction 1111 by applying filter processing to a region of 3 x 3 with a target pixel 1102 in a linear region 1101 as the center. The calculation unit 314 determines the luminance gradient direction 1111 as the width direction of the linear region 1101, and determines a direction 1112 perpendicular to the width direction as the length direction of the linear region 1101.

FIGs. 12A and 12B each illustrate an example of a filter of 3 x 3. FIG. 12A illustrates a lateral direction sobel filter, and FIG. 12B illustrates a longitudinal direction sobel filter. An angle $\theta$ formed between the coordinate axis of the coordinate u and the luminance gradient direction 1111 is expressed by the following formula using an output a of the lateral direction sobel filter with respect to the target pixel 1102 and an output b of the longitudinal direction sobel filter with respect to the target pixel 1102.

$$\theta = \tan^{-1}(b/a) \quad (5)$$

In this case, the calculation unit 314 calculates the angle $\theta$ indicating the luminance gradient direction 1111 of the target pixel 1102 using the formula (5).

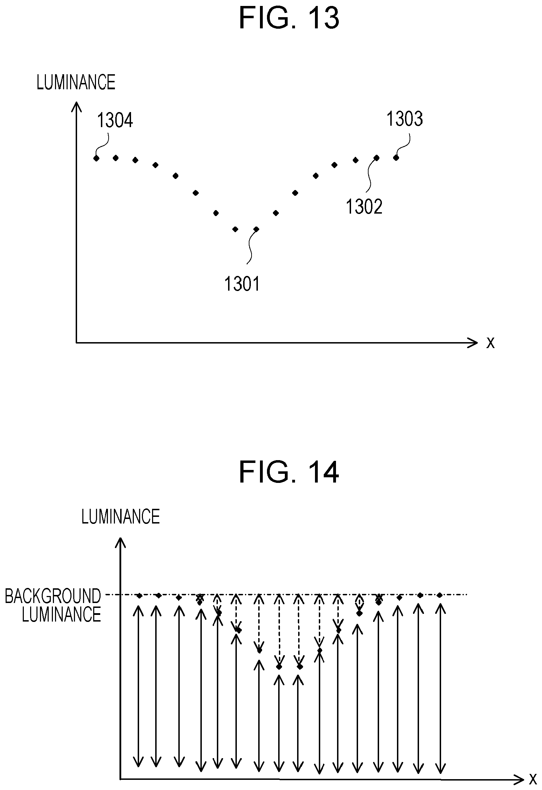

FIG. 13 illustrates an example of the background luminance calculation processing in step 1004. A lateral axis represents a coordinate x in the width direction of the linear region, a longitudinal axis represents the luminance, and a plurality of plotted dots each represents the luminance of each of a plurality of pixels in the width direction.

In a case where a dot 1301 expresses a target pixel, the calculation unit 314 searches a background pixel belonging to the background region from the dot 1301 toward an outer side of the linear region. For example, the calculation unit 314 checks a luminance difference between two adjacent pixels in a direction in which x increases in order, in a case where the luminance difference is smaller than the threshold, and determines a pixel positioned on the outer side of the two pixels as the background pixel.

For example, in a case where the difference between luminance of a dot 1302 and luminance of a dot 1303 is smaller than the threshold, the calculation unit 314 determines a pixel expressed by the dot 1303 on the outer side as the background pixel. Furthermore, the calculation unit 314 performs search in a direction in which x decreases in the same manner, obtains a dot 1304 positioned on an opposite side from the dot 1303, and determines a pixel expressed by the dot 1304 as another background pixel. This makes it possible for the calculation unit 314 to specify pixels present between the two background pixels as the pixels in the linear region. The calculation unit 314 determines luminance of any background pixel as the background luminance.

FIG. 14 illustrates an example of the luminance information addition processing in step 1005. A solid line arrow expresses luminance of each pixel in the width direction of the linear region, a broken line arrow expresses a difference between the background luminance and the luminance of each pixel. In a case where the luminance of each pixel is used as the luminance information, the calculation unit 314 obtains a luminance total sum expressed by the solid line arrows of the pixels in the linear region as the luminance information sum. On the other hand, in a case where a difference between the background luminance and the luminance of each pixel is used as the luminance information, the calculation unit 314 obtains a difference total sum expressed by the broken line arrows of the pixels in the linear region as the luminance information sum.

In the vicinity of a boundary between the linear region and the background region, since the difference expressed by the broken line arrow is close to 0, even if the position of the background pixel determined in step 1004 slightly deviates, the difference total sum expressed by the broken line arrows hardly changes. Accordingly, using the difference as the luminance information reduces an error of the luminance information sum, and accuracy of the estimation result 325 is improved.

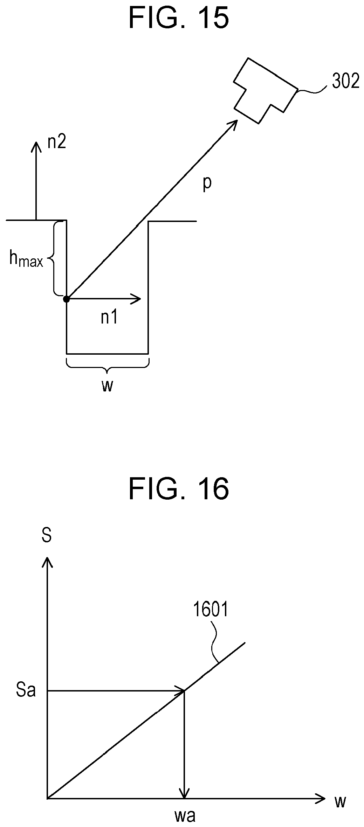

FIG. 15 illustrates an example of a method for obtaining the maximum depth $h_{max}$ of the crack observable from the imaging apparatus 302 in the width estimation processing in step 1007. The vector n1 is a normal vector of a surface at a position of the depth $h_{max}$, the vector n2 is a normal vector of a surface on the surface of the object, and a vector p is a vector from the position of the depth $h_{max}$ toward the imaging apparatus 302. In this case, the maximum depth $h_{max}$ is expressed by the following formula using an inner product of the vector p and the vector n1, an inner product of the vector p and the vector n2, and the crack width w.

$$h_{max} = (p \cdot n2 / p \cdot n1) \, w \quad (6)$$

The vector p expresses the posture of the imaging apparatus 302 with respect to the surface of the object, and may be obtained from the photographing condition acquired in step 1006. For example, a vector indicating a relative direction of an optical axis of the imaging apparatus 302 to the surface of the object may be used as the vector p.

According to the method illustrated in FIGs. 9A to 9C, as the relational expression 324 indicating a relationship between a luminance information sum S and the crack width w, the following formula is obtained.

$$S = \frac{\left(\int_0^{h_{max}} F1 dh\right) B}{F2 * r} \qquad (7)$$

$$S = \frac{\left(\int_0^{w} F2 dx - \int_0^{h_{max}} F1 dh\right) B}{F2 * r} \qquad (8)$$

The formula (7) expresses the luminance information sum S in a case where the luminance information expresses the luminance of each pixel, and the formula (8) expresses the luminance information sum S in a case where the luminance information expresses the difference between the background luminance and the luminance of each pixel.

F1 expresses the intensity of the reflected light at the position of the depth h, and depends on the crack width w. F2 expresses the intensity of the reflected light on the surface of the object, and does not depend on the crack width w. F1 is expressed by the formula (3), F2 expressed by the formula (4), and $h_{max}$ is expressed by the formula (6). In any of the formula (7) or formula (8), by expressing the luminance information sum S using F1 and $h_{max}$ which depend on the crack width w, it is possible to determine the relationship between the luminance information sum S and the crack width w.

B expresses the background luminance obtained in step 1004, r expresses the resolution of the image 321 included in the photographing condition. Using the background luminance B as a parameter makes it possible to convert F1 and F2 each of which expresses the intensity of the reflected light to the luminance.

Unknown value included in the right side of each of the formula (7) and formula (8) is only the crack width w. Accordingly, based on the formula (7) or formula (8), it is possible to derive a calculation formula for obtaining the crack width w from the luminance information sum S. In the width estimation processing in step 1007, using the calculation formula derived from the formula (7) or formula (8), the estimation unit 315 calculates the crack width w from the luminance information sum S obtained in step 1005.

Since the luminance information sum S is a total sum of gradation values expressing the luminance, it is possible to estimate the crack width in a sub-pixel unit. Furthermore, using the resolution of the image 321 as the parameter makes it possible to convert the crack width in a sub-pixel unit to a length in a real space.

FIG. 16 illustrates an example of a method for calculating the crack width w. A lateral axis represents the crack width w, and a longitudinal axis represents the luminance information sum S. A graph 1601 expresses the calculation formula derived from the formula (8), the luminance information sum S monotonously increases as the crack width w increases. In a case where the luminance information sum obtained in step 1005 is Sa, from the graph 1601, a corresponding crack width wa is obtained.

In step 1009, the output unit 316 may display the estimation result 325 on a screen, or may transmit display data for displaying the estimation result 325 to a user terminal through a communication network. The user terminal is capable of displaying the estimation result 325 on a screen using the display data received from the image processing apparatus 301.

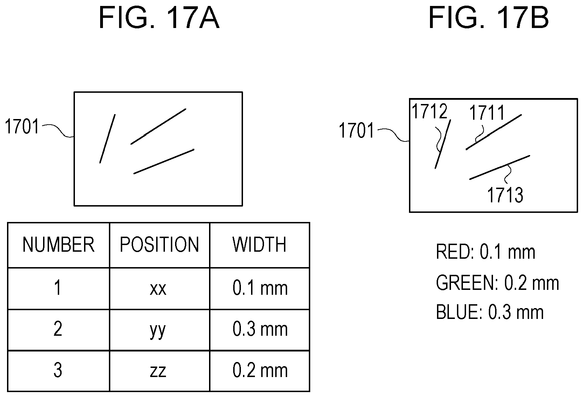

FIGs. 17A and 17B each illustrate an example of the estimation result 325 displayed on the screen of the image processing apparatus 301 or the user terminal. FIG. 17A illustrates the estimation result 325 with a table form. Three cracks are displayed on an image 1701, and a table 1702 includes a number, a position, and a width of each of the cracks. The number is identification information of the crack, the position expresses coordinates of the crack in the image 1701, and the width expresses the estimated crack width. In this example, the crack width is displayed in mm units.

FIG. 17B illustrates a display image of the estimation result 325 color-coded for each crack width. A crack 1711, a crack 1712, and a crack 1713 in the image 1701 are displayed while being colored in red, green, and blue, respectively. The crack widths of red, green, and blue are 0.1 mm, 0.2 mm, and 0.3 mm, respectively.

The configuration of the image processing apparatus 101 in FIG. 1 is merely an example, part of the constituent elements may be omitted or changed in accordance with an application or a condition of the image processing apparatus 101.

The configuration of the image processing system in FIG. 3 is merely an example, part of the constituent elements may be omitted or changed in accordance with an application or a condition of the image processing apparatus 301. For example, in a case where the image 321 is stored in the storage unit 311 beforehand, the acquisition unit 312 may be omitted. In a case where the estimation result 325 is not required to be output, the output unit 316 may be omitted.

The flowcharts in FIG. 2 and FIG. 10 are merely examples, part of processing may be omitted or changed in accordance with a configuration or a condition of the image processing apparatus. For example, in the image processing in FIG. 10, in a case where the image 321 is stored in the storage unit 311 beforehand, the processing of step 1001 may be omitted. The image processing apparatus 301 is not required to perform the processing from step 1003 to step 1007 for all the pixels included in the linear region to be processed, may perform only for part of the pixels.

The luminance f(x), the luminance h(x), and the blur function g(x) illustrated in FIG. 4 are merely examples, the luminance f(x), the luminance h(x), and the blur function g(x) change in accordance with the image 321. The environmental light illustrated in FIGs. 5A and 5B is merely an example, the environmental light changes in accordance with the photographing condition. The light angle ranges illustrated in FIGs. 6A to 6C and the relationship between the depth and the luminance illustrated in FIG. 7 are merely examples, the light angle range and the relationship between the depth and the luminance change in accordance with a damage shape.

The light input ranges illustrated in FIGs. 8A and 8B are merely examples, the light input range changes in accordance with shapes of the object and the damage. The area S2, the area S3, and the area S4 illustrated in FIGs. 9A to 9C are merely examples, these areas change in accordance with the image 321. The linear region illustrated in FIG. 11 and the luminance of each of the plurality of pixels illustrated in FIG. 13 and FIG. 14 are merely examples, the linear region and the luminance of the pixel change in accordance with the image 321.

The filters illustrated in FIGs. 12A and 12B are merely examples, another filter may be used in accordance with a configuration or a condition of the image processing apparatus 301. The method for obtaining the maximum depth illustrated in FIG. 15 and the method for calculating the crack width illustrated in FIG. 16 are merely examples, another method may be used in accordance with a configuration or a condition of the image processing apparatus 301. The estimation results illustrated in FIGs. 17A and 17B are merely examples, the estimation result changes in accordance with the image 321.

The formula (1) to the formula (8) are merely examples, another calculation formula may be used in accordance with a configuration or a condition of the image processing apparatus 301.

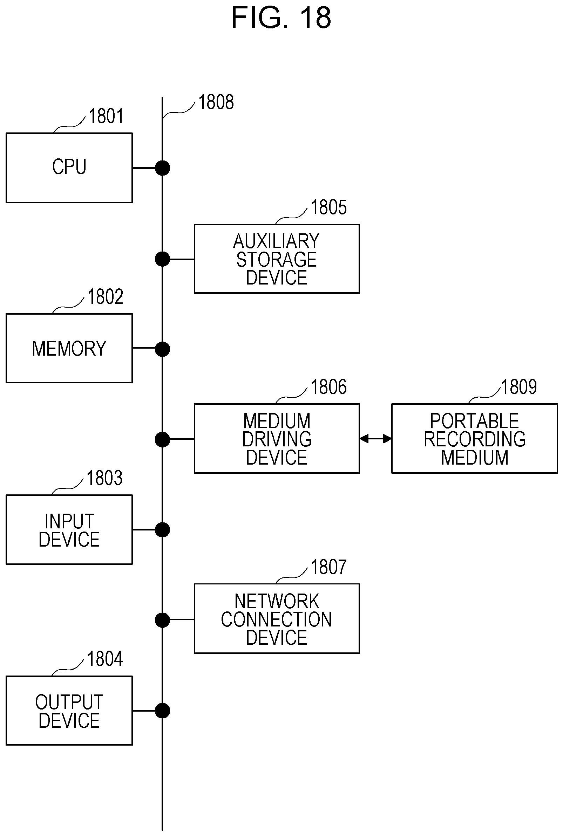

FIG. 18 illustrates a configuration example of an information processing apparatus (computer) used as the image processing apparatus 101 in FIG. 1 and the image processing apparatus 301 in FIG. 3. The information processing apparatus in FIG. 18 includes a central processing unit (CPU) 1801, a memory 1802, an input device 1803, an output device 1804, an auxiliary storage device 1805, a medium driving device 1806, and a network connection device 1807. These constituent elements are connected to one another by a bus 1808. The imaging apparatus 302 in FIG. 3 may be connected to the bus 1808.

The memory 1802 is a semiconductor memory such as a read only memory (ROM), a random access memory (RAM), a flash memory, or the like, for example, and stores a program and data used for the processing. The memory 1802 may be used as the storage unit 111 in FIG. 1 or the storage unit 311 in FIG. 3.

The CPU 1801 (processor) operates as the extraction unit 112, the calculation unit 113, and the estimation unit 114 in FIG. 1, by executing the program using the memory 1802, for example. The CPU 1801 also operates as the acquisition unit 312, the extraction unit 313, the calculation unit 314, and the estimation unit 315 in FIG. 3, by executing the program using the memory 1802.

The input device 1803 is, for example, a keyboard, a pointing device, or the like, and used for inputting an instruction or information from an operator or a user. The output device 1804 is, for example, a display device, a printer, a speaker, or the like, and used for outputting an inquiry or an instruction and a processing result to the operator or the user. The output device 1804 may be used as the output unit 316 in FIG. 3. The processing result may be the estimation result 325.

The auxiliary storage device 1805 is, for example, a magnetic disk device, an optical disk device, a magneto-optical disk device, a tape device, or the like. The auxiliary storage device 1805 may be a hard disk drive or a flash memory. The information processing apparatus may store the program and the data in the auxiliary storage device 1805, may load them to the memory 1802 and use them. The auxiliary storage device 1805 may be used as the storage unit 111 in FIG. 1 or the storage unit 311 in FIG. 3.

The medium driving device 1806 drives a portable recording medium 1809 and accesses recorded contents thereof. The portable recording medium 1809 is a memory device, a flexible disk, an optical disk, a magneto-optical disk, or the like. The portable recording medium 1809 may be a compact disk read only memory (CD-ROM), a digital versatile disk (DVD), a Universal Serial Bus (USB) memory, or the like. The operator or the user may store the program and the data in this portable recording medium 1809, may load them to the memory 1802 and use them.

As described above, a computer readable recording medium which stores the program and the data used for the processing is a physical (non-transitory) recording medium such as the memory 1802, the auxiliary storage device 1805, or the portable recording medium 1809.

The network connection device 1807 is a communication interface circuit which is connected to a communication network such as a local area network (LAN), a wide area network (WAN), or the like, and performs data conversion accompanied by communication. The information processing apparatus may receive the program and the data from an external device through the network connection device 1807, and may load them to the memory 1802 and use them. The network connection device 1807 may be used as the output unit 316 in FIG. 3.

The information processing apparatus may receive the image 321 and a processing request from the user terminal through the network connection device 1807, and may transmit the display data for displaying the estimation result 325 to the user terminal as well.

Note that the information processing apparatus is not required to include all the constituent elements in FIG. 18, part of the constituent elements may be omitted in accordance with an application or a condition. For example, in a case where a dialogue with the operator or the user is not required, the input device 1803 and the output device 1804 may be omitted. In a case where the portable recording medium 1809 or the communication network is not used, the medium driving device 1806 or the network connection device 1807 may be omitted, respectively.

Although the embodiment of the disclosure and advantages thereof have been described in detail, various modifications, additions, and omissions may be made by those skilled in the art without departing from the scope of the present embodiment explicitly described in the following claims.

LIST OF REFERENCE SIGNS

| | |
|---|---|
| 101, 301: | IMAGE PROCESSING APPARATUS |
| 111, 311: | STORAGE UNIT |
| 112, 313: | EXTRACTION UNIT |
| 113, 314: | CALCULATION UNIT |
| 114, 315: | ESTIMATION UNIT |
| 121, 321, 1701: | IMAGE |
| 302: | IMAGING APPARATUS |
| 316: | OUTPUT UNIT |
| 322: | REGION INFORMATION |
| 323: | LUMINANCE TOTAL SUM INFORMATION |
| 324: | RELATIONAL EXPRESSION |
| 325: | ESTIMATION RESULT |
| 401: | POLYGONAL LINE |
| 402, 403: | LINE SEGMENT |
| 404, 405: | CURVED LINE |
| 701, 1601: | GRAPH |
| 901 to 904: | STRAIGHT LINE |
| 1101: | LINEAR REGION |
| 1102: | TARGET PIXEL |
| 1111: | LUMINANCE GRADIENT DIRECTION |
| 1112: | DIRECTION PERPENDICULAR TO WIDTH DIRECTION |
| 1301 to 1304: | DOT |
| 1702: | TABLE |
| 1711 to 1713: | CRACK |
| 1801: | CPU |
| 1802: | MEMORY |
| 1803: | INPUT DEVICE |
| 1804: | OUTPUT DEVICE |
| 1805: | AUXILIARY STORAGE DEVICE |
| 1806: | MEDIUM DRIVING DEVICE |
| 1807: | NETWORK CONNECTION DEVICE |
| 1808: | BUS |
| 1809: | PORTABLE RECORDING MEDIUM |

**Claims**

1. An image processing apparatus (101) comprising:

   a storage unit (111) configured to store an image (121) of an object photographed by an imaging apparatus (302);
   an extraction unit (112) configured to extract a linear region (1101) in which a linear damage appears from the image (121) of the object;

a calculation unit (113) configured to obtain a luminance information sum by adding luminance information for each pixel included in the linear region (1101) in a direction crossing the linear region (1101); and

an estimation unit (114) configured to estimate a width of the linear damage from the calculated luminance information sum, based on a relational expression (324) indicating a relationship between luminance information sum and a width of a damage,

**characterized in that**

the relational expression (324) includes a parameter indicating a posture of the imaging apparatus (302) with respect to a surface of the object.

2. The image processing apparatus (101) according to claim 1,
wherein the calculation unit (113) obtains, for each of pixels included in the linear region (1101), using luminance of the each of pixels as a target pixel (1102) and luminance of an adjacent pixel adjacent to the target pixel (1102), a direction in which the luminance changes, and uses the direction in which the luminance changes as the direction crossing the linear region (1101).

3. The image processing apparatus (101) according to claim 2,

wherein the relational expression (324) includes a parameter indicating luminance of a pixel of a background region other than the linear region (1101),

the calculation unit (113) checks a luminance difference between two adjacent pixels from the target pixel (1102) toward an outer side of the linear region (1101) in the direction in which the luminance changes, and obtains luminance of a pixel positioned on the outer side of two pixels for which the luminance difference becomes smaller than a threshold, and

the estimation unit (114) uses the luminance of the pixel positioned on the outer side as the luminance of the pixel of the background region.

4. The image processing apparatus (101) according to claim 3,
wherein the relational expression (324) includes intensity of reflected light inside the linear damage, intensity of reflected light on a surface of the object, and a maximum depth of the linear damage observable from the imaging apparatus.

5. The image processing apparatus (101) according to any one of claims 1 to 4,
wherein the relational expression (324) includes a parameter indicating a resolution of the image (121) of the object.

6. The image processing apparatus (101) according to any one of claims 1 to 5,
wherein the luminance information of each pixel expresses a difference between the luminance of the pixel of the background region other than the linear region (1101) and the luminance of each pixel included in the linear region (1101), or the luminance of each pixel included in the linear region (1101).

7. An image processing method performed by a computer, the method comprising:

extracting a linear region (1101) in which a linear damage appears from an image (121) of an object captured by an imaging apparatus (302);

calculating a luminance information sum by adding luminance information of each pixel included in the linear region (1101) in a direction crossing the linear region (1101); and

estimating, from the calculated luminance information sum, based on a relational expression (324) indicating a relationship between luminance information sum and a width of a damage, a width of the linear damage,

**characterized in that**

the relational expression (324) includes a parameter indicating a posture of the imaging apparatus (302) with respect to a surface of the object.

8. The image processing method according to claim 7,
wherein in the calculating, the direction crossing the linear region (1101) is a direction in which the luminance changes, obtained by using, for each of pixels included in the linear region (1101), luminance of the each of pixels as a target pixel (1102) and luminance of an adjacent pixel adjacent to the target pixel (1102).

9. The image processing method according to claim 8,

wherein the relational expression (324) includes a parameter indicating luminance of a pixel of a background region other than the linear region (1101),
in the calculating, a luminance difference between two adjacent pixels is checked from the target pixel (1102) toward an outer side of the linear region (1101) in the direction in which the luminance changes, and luminance of a pixel positioned on the outer side of the two pixels for which the luminance difference becomes smaller than a threshold is obtained, and
in the estimating, the luminance of the pixel positioned on the outer side is used as the luminance of the pixel of the background region.

10. A computer-readable storage medium storing an image processing
program which, when executed by a computer, causes the computer to perform a process comprising:

extracting a linear region (1101) in which a linear damage appears from an image of the object captured by an imaging apparatus (302);
**characterized by** further comprising:

calculating a luminance information sum by adding luminance information of each pixel included in the linear region (1101) in a direction crossing the linear region (1101); and
estimating, from the calculated luminance information sum, based on a relational expression (324) indicating a relationship between luminance information sum and a width of a damage, a width of the linear damage,
**characterized in that**
the relational expression (324) includes a parameter indicating a posture of the imaging apparatus (302) with respect to a surface of the object.

11. The storage medium according to claim 10,
wherein in the calculating, the direction crossing the linear region (1101) is a direction in which the luminance changes, obtained by using, for each of pixels included in the linear region (1101), luminance of the each of pixels as a target pixel (1102) and luminance of an adjacent pixel adjacent to the target pixel (1102).

12. The storage medium according to claim 11,

wherein the relational expression (324) includes a parameter indicating luminance of a pixel of a background region other than the linear region (1101),
in the calculating, a luminance difference between two adjacent pixels is checked from the target pixel (1102) toward an outer side of the linear region (1101) in the direction in which the luminance changes, and luminance of a pixel positioned on the outer side of the two pixels for which the luminance difference becomes smaller than a threshold is obtained, and
in the estimating, the luminance of the pixel positioned on the outer side is used as the luminance of the pixel of the background region.

**Patentansprüche**

1. Bildverarbeitungseinrichtung (101) umfassend:

eine Speichereinheit (111), die konfiguriert ist, ein Bild (121) eines Objekts zu speichern, das von einer Abbildungseinrichtung (302) fotografiert wird;
eine Extraktionseinheit (112), die konfiguriert ist, einen linearen Bereich (1101) zu extrahieren, in dem ein linearer Schaden aus dem Bild (121) des Objekts aufscheint;
eine Berechnungseinheit (113), die konfiguriert ist, eine Luminanzinformationssumme zu erhalten, indem Luminanzinformationen für jedes Pixel addiert werden, das in dem linearen Bereich (1101) in einer Richtung beinhaltet ist, die den linearen Bereich (1101) quert; und
eine Schätzungseinheit (114), die konfiguriert ist, eine Breite des linearen Schadens von der berechneten Luminanzinformationssumme zu schätzen, basierend auf einem Vergleichsausdruck (324), der eine Beziehung zwischen Luminanzinformationssumme und einer Breite eines Schadens angibt,
**dadurch gekennzeichnet, dass** der Vergleichsausdruck (324) einen Parameter beinhaltet, der eine Lage der Abbildungseinrichtung (302) in Bezug auf eine Oberfläche des Objekts angibt.

**2.** Bildverarbeitungseinrichtung (101) nach Anspruch 1,
wobei die Berechnungseinheit (113) für jedes von Pixeln, die in dem linearen Bereich (1101) beinhaltet sind, unter Verwendung von Luminanz jedes der Pixel als ein Zielpixel (1102) und Luminanz eines angrenzenden Pixels, das an das Zielpixel (1102) angrenzt, eine Richtung erhält, in der die Luminanz sich ändert und die Richtung, in der die Luminanz sich ändert, als die Richtung verwendet, die den linearen Bereich (1101) quert.

**3.** Bildverarbeitungseinrichtung (101) nach Anspruch 2,
wobei der Vergleichsausdruck (324) einen Parameter beinhaltet, der Luminanz eines Pixels eines anderen Hintergrundbereichs als dem linearen Bereich (1101) angibt,
die Berechnungseinheit (113) einen Luminanzunterschied zwischen zwei angrenzenden Pixeln von dem Zielpixel (1102) zu einer Außenseite des linearen Bereichs (1101) in der Richtung prüft, in der sich die Luminanz ändert, und Luminanz eines Pixels erhält, das an der Außenseite von zwei Pixeln positioniert ist, für die der Luminanzunterschied kleiner als ein Schwellenwert wird und
die Schätzungseinheit (114) die Luminanz des Pixels, das an der Außenseite positioniert ist, als die Luminanz des Pixels des Hintergrundbereichs verwendet.

**4.** Bildverarbeitungseinrichtung (101) nach Anspruch 3,
wobei der Vergleichsausdruck (324) Intensität von reflektiertem Licht innerhalb des linearen Schadens, Intensität von reflektiertem Licht an einer Oberfläche des Objekts und eine maximale Tiefe des linearen Schadens, der von der Bildeinrichtung beobachtet werden kann, beinhaltet.

**5.** Bildverarbeitungseinheit (101) nach einem der Ansprüche 1 bis 4,
wobei der Vergleichsausdruck (324) einen Parameter beinhaltet, der eine Auflösung des Bilds (121) des Objekts angibt.

**6.** Bildverarbeitungseinrichtung (101) nach einem der Ansprüche 1 bis 5,
wobei die Luminanzinformationen jedes Pixels einen Unterschied zwischen der Luminanz des Pixels des anderen Hintergrundbereichs als dem linearen Bereich (1101) und der Luminanz jedes Pixels, das in dem linearen Bereich (1101) beinhaltet ist, oder der Luminanz jedes Pixels, das in dem linearen Bereich (1101) beinhaltet ist, ausdrückt.

**7.** Bildverarbeitungsverfahren, das von einem Computer durchgeführt wird, wobei das Verfahren umfasst:

Extrahieren eines linearen Bereichs (1101), in dem ein linearer Schaden von einem Bild (121) eines Objekts aufscheint, das von einer Abbildungseinrichtung (302) aufgenommen wird;
Berechnen einer Luminanzinformationssumme, indem Luminanzinformationen jedes Pixels addiert werden, das in dem linearen Bereich (1101) beinhaltet ist, in einer Richtung, die den linearen Bereich (1101) quert; und
Schätzen, von der berechneten Luminanzinformationssumme, basierend auf einem Vergleichsausdruck (324), der eine Beziehung zwischen Luminanzinformationssumme und einer Breite eines Schadens angibt, einer Breite des linearen Schadens,
**dadurch gekennzeichnet, dass** der Vergleichsausdruck (324) einen Parameter beinhaltet, der eine Lage der Abbildungseinrichtung (302) in Bezug auf eine Oberfläche des Objekts angibt.

**8.** Bildverarbeitungsverfahren nach Anspruch 7,
wobei bei dem Berechnen, die Richtung, die den linearen Bereich (1101) quert, eine Richtung ist, in der die Luminanz sich ändert, die unter Verwendung, für jedes von Pixeln, die in dem linearen Bereich (1101) beinhaltet sind, von Luminanz jedes der Pixel als ein Zielpixel (1102) und Luminanz eines angrenzenden Pixels, das an das Zielpixel (1102) angrenzt, erhalten wird.

**9.** Bildverarbeitungsverfahren nach Anspruch 8,
wobei der Vergleichsausdruck (324) einen Parameter beinhaltet, der Luminanz eines Pixels eines anderen Hintergrundbereichs als dem linearen Bereich (1101) angibt,
bei dem Berechnen ein Luminanzunterschied zwischen zwei angrenzenden Pixeln von dem Zielpixel (1102) zu einer Außenseite des linearen Bereichs (1101) in der Richtung geprüft wird, in der die Luminanz sich ändert, und Luminanz eines Pixels, das an der Außenseite der zwei Pixel positioniert ist, für die der Luminanzunterschied kleiner als eine Schwelle wird, erhalten ist und
bei dem Schätzen die Luminanz des Pixels, das an der Außenseite positioniert ist, als die Luminanz des Pixels des Hintergrundbereichs verwendet wird.

**10.** Computerlesbares Speichermedium, das ein Bildverarbeitungsprogramm speichert, das, wenn von einem Computer ausgeführt, den Computer veranlasst, einen Prozess durchzuführen, der umfasst:

Extrahieren eines linearen Bereichs (1101), in dem ein linearer Schaden von einem Bild des Objekts aufscheint, das von einer Abbildungseinrichtung (302) aufgenommen wird;
gekennzeichnet, indem es weiter umfasst:

Berechnen einer Luminanzinformationssumme, indem Luminanzinformationen jedes Pixels addiert werden, das in dem linearen Bereich (1101) beinhaltet ist, in einer Richtung, die den linearen Bereich (1101) quert; und
Schätzen von der berechneten Luminanzinformationssumme, basierend auf einem Vergleichsausdruck (324), der eine Beziehung zwischen Luminanzinformationssumme und einer Breite eines Schadens angibt, einer Breite des linearen Schadens, **dadurch gekennzeichnet, dass** der Vergleichsausdruck (324) einen Parameter beinhaltet, der eine Lage der Abbildungseinrichtung (302) in Bezug auf eine Oberfläche des Objekts angibt.

**11.** Speichermedium nach Anspruch 10,
wobei bei dem Berechnen die Richtung, die den linearen Bereich (1101) quert, eine Richtung ist, in der die Luminanz sich ändert, die erhalten wird, indem für jedes von Pixeln, die in dem linearen Bereich (1101) beinhaltet sind, Luminanz jedes der Pixel als ein Zielpixel (1102) und Luminanz eines angrenzenden Pixels, das an das Zielpixel (1102) angrenzt, verwendet wird.

**12.** Speichermedium nach Anspruch 11,

wobei der Vergleichsausdruck (324) einen Parameter beinhaltet, der Luminanz eines Pixels eines anderen Hintergrundbereichs als dem linearen Bereich (1101) angibt,
bei dem Berechnen ein Luminanzunterschied zwischen zwei angrenzenden Pixeln von dem Zielpixel (1102) zu einer Außenseite des linearen Bereichs (1101) in der Richtung geprüft wird, in der die Luminanz sich ändert, und Luminanz eines Pixels, das an der Außenseite der zwei Pixel positioniert ist, für die der Luminanzunterschied kleiner als ein Schwellenwert ist, erhalten wird und
bei dem Schätzen die Luminanz des Pixels, das an der Außenseite positioniert ist, als die Luminanz des Pixels des Hintergrundbereichs verwendet wird.

# Revendications

**1.** Appareil de traitement d'images (101) comprenant :

une unité de stockage (111) configurée pour stocker une image (121) d'un objet photographié par un appareil d'imagerie (302) ;
une unité d'extraction (112) configurée pour extraire une région linéaire (1101) dans laquelle un dommage linéaire apparaît de l'image (121) de l'objet ;
une unité de calcul (113) configurée pour obtenir une somme d'informations de luminance en ajoutant des informations de luminance pour chaque pixel inclus dans la région linéaire (1101) dans une direction traversant la région linéaire (1101) ; et
une unité d'estimation (114) configurée pour estimer une largeur du dommage linéaire à partir de la somme d'informations de luminance calculée sur la base d'une expression relationnelle (324) indiquant une relation entre la somme d'informations de luminance et une largeur d'un dommage,
**caractérisé en ce que** l'expression relationnelle (324) inclut un paramètre indiquant une posture de l'appareil d'imagerie (302) par rapport à une surface de l'objet.

**2.** Appareil de traitement d'images (101) selon la revendication 1,
dans lequel l'unité de calcul (113) obtient, pour chacun des pixels inclus dans la région linéaire (1101), en utilisant la luminance de chacun des pixels comme pixel cible (1102) et la luminance d'un pixel adjacent adjacent au pixel cible (1102), une direction dans laquelle la luminance varie et utilise la direction dans laquelle la luminance varie comme direction traversant la région linéaire (1101).

**3.** Appareil de traitement d'images (101) selon la revendication 2,

dans lequel l'expression relationnelle (324) inclut un paramètre indiquant la luminance d'un pixel d'une région de fond autre que la région linéaire (1101),

l'unité de calcul (113) contrôle une différence de luminance entre deux pixels adjacents depuis le pixel cible (1102) vers un côté externe de la région linéaire (1101) dans la direction dans laquelle la luminance varie et obtient la luminance d'un pixel positionné sur le côté externe de deux pixels pour lesquels la différence de luminance devient plus petite qu'un seuil, et

l'unité d'estimation (114) utilise la luminance du pixel positionné sur le côté externe comme luminance du pixel de la région de fond.

**4.** Appareil de traitement d'images (101) selon la revendication 3,
dans lequel l'expression relationnelle (324) inclut l'intensité de la lumière réfléchie au sein du dommage linéaire, l'intensité de la lumière réfléchie sur une surface de l'objet et une profondeur maximale du dommage linéaire observable depuis l'appareil d'imagerie.

**5.** Appareil de traitement d'images (101) selon l'une quelconque des revendications 1 à 4,
dans lequel l'expression relationnelle (324) inclut un paramètre indiquant une résolution de l'image (121) de l'objet.

**6.** Appareil de traitement d'images (101) selon l'une quelconque des revendications 1 à 5,
dans lequel les informations de luminance de chaque pixel expriment une différence entre la luminance du pixel de la région de fond autre que la région linéaire (1101) et la luminance de chaque pixel inclus dans la région linéaire (1101) ou la luminance de chaque pixel inclus dans la région linéaire (1101).

**7.** Procédé de traitement d'images effectué par un ordinateur, le procédé comprenant :

l'extraction d'une région linéaire (1101) dans laquelle un dommage linéaire apparaît d'une image (121) d'un objet capturé par un appareil d'imagerie (302) ;

le calcul d'une somme d'informations de luminance en ajoutant des informations de luminance de chaque pixel inclus dans la région linéaire (1101) dans une direction traversant la région linéaire (1101) ; et

l'estimation, à partir de la somme d'informations de luminance calculée, sur la base d'une expression relationnelle (324) indiquant une relation entre la somme d'informations de luminance et une largeur d'un dommage, d'une largeur du dommage linéaire,

**caractérisé en ce que** l'expression relationnelle (324) inclut un paramètre indiquant une posture de l'appareil d'imagerie (302) par rapport à une surface de l'objet.

**8.** Procédé de traitement d'images selon la revendication 7,
dans lequel, lors du calcul, la direction traversant la région linéaire (1101) est une direction dans laquelle la luminance varie, obtenue en utilisant, pour chacun des pixels inclus dans la région linéaire (1101), la luminance de chacun des pixels comme pixel cible (1102) et la luminance d'un pixel adjacent adjacent au pixel cible (1102).

**9.** Procédé de traitement d'images selon la revendication 8,
dans lequel l'expression relationnelle (324) inclut un paramètre indiquant la luminance d'un pixel d'une région de fond autre que la région linéaire (1101),

lors du calcul, une différence de luminance entre deux pixels adjacents est contrôlée à partir du pixel cible (1102) vers un côté externe de la région linéaire (1101) dans la direction dans laquelle la luminance varie, et la luminance d'un pixel positionné sur le côté externe des deux pixels pour lesquels la différence de luminance devient plus petite qu'un seuil est obtenue, et

lors de l'estimation, la luminance du pixel positionné sur le côté externe est utilisée comme luminance du pixel de la région de fond.

**10.** Support de stockage lisible par ordinateur stockant un programme de traitement d'images qui, lorsqu'il est exécuté par un ordinateur, amène l'ordinateur à effectuer un procédé comprenant :

l'extraction d'une région linéaire (1101) dans laquelle un dommage linéaire apparaît d'une image de l'objet capturé par un appareil d'imagerie (302) ;

**caractérisé en ce qu'**il comprend en outre :

le calcul d'une somme d'informations de luminance en ajoutant des informations de luminance de chaque pixel inclus dans la région linéaire (1101) dans une direction traversant la région linéaire (1101) ; et

l'estimation, à partir de la somme d'informations de luminance calculée, sur la base d'une expression relationnelle (324) indiquant une relation entre la somme d'informations de luminance et une largeur d'un dommage, d'une largeur du dommage linéaire,

**caractérisé en ce que** l'expression relationnelle (324) inclut un paramètre indiquant une posture de l'appareil d'imagerie (302) par rapport à une surface de l'objet.

11. Support de stockage selon la revendication 10,
dans lequel, lors du calcul, la direction traversant la région linéaire (1101) est une direction dans laquelle la luminance varie, obtenue en utilisant, pour chacun des pixels inclus dans la région linéaire (1101), la luminance de chacun des pixels comme pixel cible (1102) et la luminance d'un pixel adjacent adjacent au pixel cible (1102).

12. Support de stockage selon la revendication 11,
dans lequel l'expression relationnelle (324) inclut un paramètre indiquant la luminance d'un pixel d'une région de fond autre que la région linéaire (1101),
lors du calcul, une différence de luminance entre deux pixels adjacents est contrôlée à partir du pixel cible (1102) vers un côté externe de la région linéaire (1101) dans la direction dans laquelle la luminance varie, et la luminance d'un pixel positionné sur le côté externe des deux pixels pour lesquels la différence de luminance devient plus petite qu'un seuil est obtenue, et
lors de l'estimation, la luminance du pixel positionné sur le côté externe est utilisée comme luminance du pixel de la région de fond.

# FIG. 1

101

**IMAGE PROCESSING APPARATUS**

112

**EXTRACTION UNIT**

113

**CALCULATION UNIT**

114

**ESTIMATION UNIT**

111

**STORAGE UNIT**

121

**IMAGE**

# FIG. 2

START

201 — EXTRACT LINEAR REGION

202 — OBTAIN LUMINANCE INFORMATION SUM

203 — ESTIMATE WIDTH OF LINEAR REGION

END

# FIG. 3

301

IMAGE PROCESSING APPARATUS

302

| IMAGING APPARATUS |

312
| ACQUISITION UNIT |

313
| EXTRACTION UNIT |

314
| CALCULATION UNIT |

315
| ESTIMATION UNIT |

316
| OUTPUT UNIT |

311

STORAGE UNIT

321
| IMAGE |

323
| LUMINANCE TOTAL SUM INFORMATION |

325
| ESTIMATION RESULT |

322
| REGION INFORMATION |

324
| RELATIONAL EXPRESSION |

FIG. 4

# FIG. 5A

302

ENVIRONMENTAL
LIGHT

# FIG. 5B

302

ENVIRONMENTAL
LIGHT

# FIG. 6A

φ1

h1

# FIG. 6B

φ2

h2

# FIG. 6C

φ3

h3

# FIG. 7

LUMINANCE

BACKGROUND
LUMINANCE

701

DEPTH h

h1  h2  h3

# FIG. 8A

$\Omega 1$

e

h

n1

w

# FIG. 8B

$\Omega 2$

e  n2

## FIG. 9A

302 ~

h = 0

h = h$_{max}$

w

## FIG. 9B

LUMINANCE

901

BACKGROUND LUMINANCE

902

903

701

S3

0      h$_{max}$      DEPTH h

## FIG. 9C

LUMINANCE

904      405      S4

BACKGROUND LUMINANCE

402      403

x1      x2      x

S2

# FIG. 10

```
                    START

1001            ACQUIRE IMAGE

1002         EXTRACT LINEAR REGION

             LOOP OF LINEAR REGION

                 LOOP OF PIXEL

1003        ESTIMATE LUMINANCE
            GRADIENT DIRECTION

1004        OBTAIN BACKGROUND
                LUMINANCE

1005        OBTAIN LUMINANCE
            INFORMATION SUM

1006       ACQUIRE PHOTOGRAPHING
                CONDITION

1007       ESTIMATE DAMAGE WIDTH


1008       OBTAIN REPRESENTATIVE
               VALUE OF WIDTH


1009       OUTPUT ESTIMATION RESULT

                    END
```

# FIG. 11

# FIG. 12A

| 1 | 0 | -1 |
|---|---|----|
| 2 | 0 | -2 |
| 1 | 0 | -1 |

# FIG. 12B

| 1 | 2 | 1 |
|---|---|---|
| 0 | 0 | 0 |
| -1 | -2 | -1 |

## FIG. 13

## FIG. 14

# FIG. 15

# FIG. 16

FIG. 17A

1701

| NUMBER | POSITION | WIDTH |
|--------|----------|--------|
| 1 | xx | 0.1 mm |
| 2 | yy | 0.3 mm |
| 3 | zz | 0.2 mm |

FIG. 17B

1701

1712  1711

1713

RED: 0.1 mm
GREEN: 0.2 mm
BLUE: 0.3 mm

# FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003214827 A
- JP 2005241471 A
- JP 2018036226 A
- JP 2017003399 A
- JP 2006067272 A

**Non-patent literature cited in the description**

- **AYAHO MIYAMOTO et al.** *Automatic Crack Recognition System for Concrete Structures Using Image Processing Approach,* 01 January 2017